# EUROPÄISCHE PATENTSCHRIFT

(11) **EP 2 838 690 B1**
(45) Veröffentlichungstag und Bekanntmachung des Hinweises auf die Patenterteilung: **17.07.2019**
(21) Anmeldenummer: 13722693.2
(22) Anmeldetag: 18.04.2013
(51) Int. Cl.: B32B 15/01, B82Y 30/00, C22C 5/06, C22C 5/08, C22C 9/00, B23K 1/20, B23K 35/30, B22F 1/00, B22F 3/10, B23K 35/34, B23K 35/36, B23K 35/02

(54) **LOTMATERIAL, VERFAHREN ZU DESSEN HERSTELLUNG UND SEINE VERWENDUNG ZUM DRUCKLOSEN FÜGEN METALLISCHER SUBSTRATE**
SOLDER MATERIAL, METHOD FOR THE PRODUCTION THEREOF, AND USE THEREOF TO JOIN METAL SUBSTRATES WITHOUT PRESSURE
BRASURE, SON PROCÉDÉ DE PRODUCTION ET SON UTILISATION POUR L'ASSEMBLAGE SANS PRESSION DE SUBSTRATS MÉTALLIQUES

(30) Priorität: 20.04.2012 DE 102012206587
(43) Veröffentlichungstag der Anmeldung: 25.02.2015
(73) Patentinhaber: Nano-Join GmbH, 10587 Berlin (DE)
(72) Erfinder: OESTREICHER, Annerose, 13583 Berlin (DE); RÖHRICH, Tobias, 10245 Berlin (DE)
(74) Vertreter: Gulde & Partner
(86) Internationale Anmeldenummer: PCT/EP2013/058105
(87) Internationale Veröffentlichungsnummer: WO 2013/156570

(56) Entgegenhaltungen:
- EP-A2- 2 042 260
- WO-A1-2008/093915
- WO-A2-03/032084
- JP-A- 2006 041 008
- US-A1- 2010 021 704
- JAKOB, A.: "SYNTHESE UND REAKTIONSVERHALTEN VON ÜBERGANGSMETALLKOMPLEXEN SOWIE DEREN VERWENDUNG IN DER HOMOGENEN KATALYSE UND METALLABSCHEIDUNG", DISSERTATION, TECHNISCHEN UNIVERSITÄT CHEMNITZ, 2009,
- MINORU, M. ET AL: "SILVER NANOSINTERING: A LEAD-FREE ALTERNATIVE TO SOLDERING", APPLIED PHYSICS A, vol. 93, no. 2, November 2008 (2008-11), pages 467-470,

## Beschreibung

Die vorliegende Erfindung betrifft ein Lotmaterial zur Erzeugung von Silberschichten und kupferhaltigen Silberschichten zwischen metallischen oder metallisierten Substraten, insbesondere Kupfersubstraten. Das Fügen mit dem erfindungsgemäßen Lotmaterial kann bei niedrigen Temperaturen erfolgen. Das erfindungsgemäße Silberlot beinhaltet einen metall-organischen Silberkomplex als Precursor, der erst beim Erhitzen Silbernanopartikel bildet und beim weiteren Erhitzen über einen Temperaturbereich von 20 bis 40 Einheiten eine Silber-metallisch schmelzflüssige Phase ausbildet, die als Prozessfenster zum Fügen bereits ab 150°C, vorzugsweise ab etwa 200°C, genutzt werden kann.

In Bereichen, in denen temperaturempfindliche Werkstoffe zu fügen sind, werden in der Regel Weichlote eingesetzt. Dies betrifft insbesondere die Mikroelektronik und Elektrotechnik. In der Vergangenheit wurden hierfür häufig bleihaltige Lote verwendet, die inzwischen aufgrund ihrer Gesundheits- und Umweltgefährdung in vielen Ländern nicht mehr zulässig (z.B. EU-Richtlinie RoHS 2002/95/EG und WEEE 2002/96/EG, in Kraft seit 01.07.2006) und durch andere Lotwerkstoffe zu ersetzen sind.

Darüber hinaus sind die Entwicklungen in der Elektronik und Mikrotechnik durch zunehmende Miniaturisierung und Erhöhung der Komplexität der Bauelemente gekennzeichnet. Die fortschreitende Miniaturisierung führt insbesondere in der Leistungselektronik zu einer höheren Leistungsdichte und einer damit verbundenen Steigerung der Einsatztemperatur der Bauelemente. Höhere Leistungen sowie platz und gewichtssparendes Design erschweren das Wärmemanagement in elektronischen Gehäusen und führen zu einer stärkeren Erwärmung der Lötstellen. Es kann zu lokalen Überhitzungen kommen, was eine Zerstörung der Lötstelle zur Folge haben kann. Die Zuverlässigkeit der aktuell verwendeten Legierungen erreichen hier ihre Grenzen.

Die mit den steigenden Spitzen- und Umgebungstemperaturen zunehmend höheren Beanspruchungen von elektronischen Baugruppen und die seit Juli 2006 in der EU geltenden Richtlinien zum Ersatz bleihaltiger Lote sind Motivation, neue Lotwerkstoffe und Technologien einzusetzen, die dauerhaft eine zuverlässige Lotverbindung auch unter Temperaturwechselbelastung gewährleisten.

Silber als Werkstoff zeichnet sich durch eine hohe elektrische und thermische Leitfähigkeit aus, so dass ein Wärmeabtransport durch eine Silberschicht effektiver stattfindet. Silber weist aber einen Schmelzpunkt von 961 °C auf. Somit kommt es als Massivmaterial für das Weichlöten nicht in Frage. Aus diesem Grunde hat der Einsatz von gesintertem Silber in den letzten Jahren vermehrt Beachtung gefunden.

Es ist seit langem bekannt, dass isolierte, kleine Partikel im unteren Nanometerbereich bei wesentlich niedrigeren Temperaturen schmelzen als ihr Bulkmaterial ("Schmelztemperaturabsenkung"). Eine derartige Temperaturabsenkung gilt auch für das Sintern. Auf diese Weise ist es möglich, mit Silbernanopartikeln Silberschichten bei niedrigen Temperaturen von 200 bis 300 °C zu erhalten.

Druckfreie Fügeverfahren bei diesen niedrigen Sintertemperaturen werden beispielsweise in DE 10 2007 046 901 A1, DE 10 2008 031 893 A1, DE 10 2009 040 076 A1 und DE 10 2009 040 078 A1 beschrieben.

So offenbart DE 10 2007 046 901 A1 ein Fügeverfahren, bei dem aus einem Silber-Precursor elementares Silber zwischen den Kontaktflächen gebildet wird. Die verwendete Silberlotpaste beinhaltet als Silber-Precursor Silberoxid, Silberlaktat oder Silbercarbonat, die unter 300°C, insbesondere unter 250°C metallisches Silber bilden. Das Silberlot beinhaltet des Weiteren ein Gel, das aus Carbonsäurekomponenten und Aminkomponenten und einem polaren Lösungsmittel, z. B. Alkohol, besteht. In dem Gel liegen der Silber-Precursor und Silber-oder Kupferpartikel mit einer Größe zwischen 0,2 und 5µm dispergiert vor. DE 10 2008 031 893 A1 beschreibt ein ähnliches Verfahren, wobei die verwendete Silberlotpaste den Silber-Precursor zu 2-20 Gew% beinhaltet.

DE 10 2009 040 076 A1 und DE 10 2009 040 078 A1 beschreiben Metallpasten zum Fügen unter 200°C, die neben mit Fettsäuren beschichteten Metallpartikeln Sinterhilfsmittel, Lösungsmittel zum Lösen dieser Sinterhilfsmittel und gegebenenfalls einen Metall-Precursor aufweisen. Die Sinterhilfsmittel können zum einen Salze oder Ester von organischen Säuren mit 1 bis 4 Kohlenstoffatomen oder Carbonylverbindungen sein. Diese Sinterhilfsmittel setzen während des Sinterprozesses Kohlenmonoxid frei, das die unter der Coatingschicht der Metallpartikel liegende, zumindest teilweise oxidierte Oberfläche reduzieren soll und so zu einer Herabsetzung der Sintertemperatur beitragen soll (DE 10 2009 040 078 A1). Andererseits können die Sinterhilfsmittel Oxidationsmittel wie organische Peroxide, anorganische Peroxide oder anorganische Säuren sein, die sicherstellen sollen, dass die Coatingverbindungen auf den Metallpartikeln unterhalb 200°C entfernt werden, so dass die Oberflächen der Metallpartikel bereits bei unter 200°C für den Sinterprozess zur Verfügung stehen (DE 10 2009 040 076 A1).

Ein Kontaktierungsmaterial aus Metall(Silber)-Precursor-Teilchen von 1 nm bis 50 µm (Metalloxid, Metallcarbonat oder Metallacetat) und einem Reduktionsmittel wird in US 2008/0156398 A1 beschrieben. Das Reduktionsmittel soll bewirken, dass der Precursor bei einer niedrigeren Temperatur reduziert wird als wenn er allein der thermischen Zersetzung unterworfen würde. Durch die Anwendung von Druck beim Fügen ergibt sich eine größere Dichte des gesinterten Silbers.

Die Dissertation von Jakob, A. an der Technischen Universität Chemniz, 2009, mit dem Titel "Synthese und Reaktionsverhalten von Übergangsmetallkomplexen sowie deren Verwendung in der homogenen Katalyse und Metallabscheidung" beschreibt u.a. das Reaktionsverhalten von Übergangsmetallkomplexen sowie deren Verwendung in der Metallabscheidung. Konkret werden in-situ Silbernanopartikel aus Silber(I)-2-[2-(2 methoxyethoxy)ethoxy]acetat zum Fügen von Kupfer erzeugt.

Es war die Aufgabe der vorliegenden Erfindung, ein alternatives Nanolot und ein Verfahren zum Fügen mit diesem Nanolot bereitzustellen, dass es erlaubt, unedle Metalloberflächen, beispielsweise Kupferoberflächen, bei niedrigen Prozesstemperaturen von maximal 250°C und ohne Anwendung von Druck auf stabile Weise miteinander zu verbinden. Es sollen sich dabei homogene Kontaktschichten mit niedriger Porösität und hoher elektrischer und thermischer Leitfähigkeit herstellen lassen.

Die Aufgabe der Erfindung wird gemäß den unabhängigen Ansprüchen gelöst. Bevorzugte Ausführungen sind in den abhängigen Ansprüchen beschrieben.

Das erfindungsgemäße Lotmaterial enthält
A) Silber(I)-2-[2-(2-methoxyethoxy)ethoxy]acetat als einen metall-organischen Silber-Precursor;
B) 25-150 Gew%, bezogen auf das Gewicht des Silber-Precursors A), unbeschichtete und agglomerierte Silberpartikel mit einem mittleren Teilchendurchmesser der Agglomerate von 100-250 nm; und
C) ein primäres oder sekundäres Silber(I)- und Kupfer(II)-alkanoat mit 8 bis 12 Kohlenstoffatomen, wobei ein Verhältnis von Silber-Precursor A) zu Komponente C) im Bereich von 1:0,5 bis 1:0,7 liegt, wenn das Lotmaterial eine alkoholhaltige Paste ist, oder im Bereich von 1:0,15 bis 1:0,5 liegt, wenn das Lotmaterial ein alkoholfreies Pulver ist;
und optional einen Alkohol als Lösungsmittel.

Gemäß der Erfindung handelt es sich bei dem eingesetzten metall-organischen Silber-Precursor um Silber(I)-2-[2-(2-methoxyethoxy)ethoxy]acetat, das die Strukturformel AgO₂C(CH₂OCH₂)₃H aufweist und ein farbloser Feststoff ist. Die Herstellung ist in Catal. Commun. 2009, 10, 437-441 beschrieben. Die erfindungsgemäß eingesetzte Silber-Precursor weist die Besonderheit auf, dass er beim Erhitzen zunächst in eine Flüssigkeit schmilzt. Beim weiteren Erhitzen bilden sich in der Flüssigkeit Silbernanopartikel. Bei weiterer Temperaturzufuhr bildet sich eine metallisch schmelzflüssige Phase aus, die über einen Bereich von 20 bis 40 K vorhanden ist bzw. sein sollte. Die organischen Anteile beginnen sich zu zersetzen und zu verflüchtigen. Zurück bleiben reaktive Silbernanopartikel, die bei anhaltender Temperaturzufuhr sintern und eine feste Silberschicht zurücklassen. Dieser im Nanolot der Erfindung enthaltene Silber-Precursor muss also bei Temperaturzufuhr eine Phasensequenz fest-flüssigschmelzflüssig aufweisen, um erfindungsgemäß geeignet zu sein.

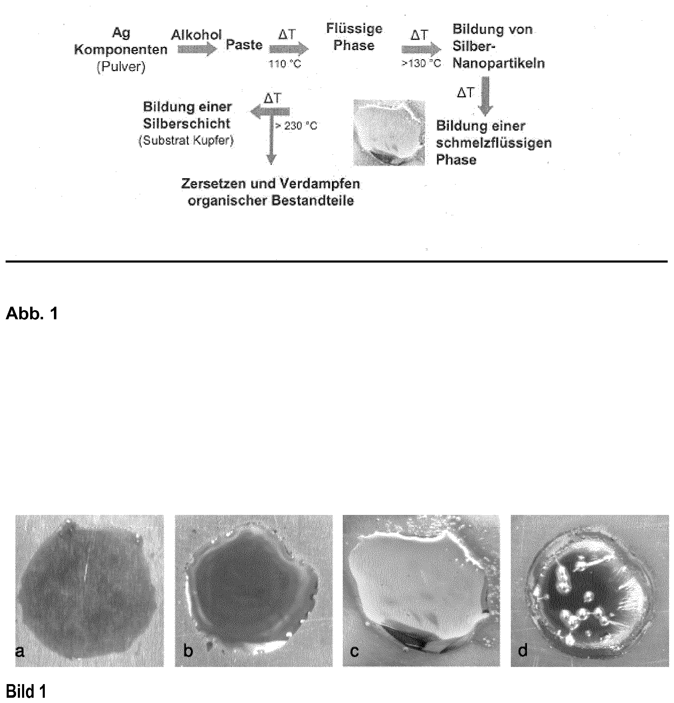

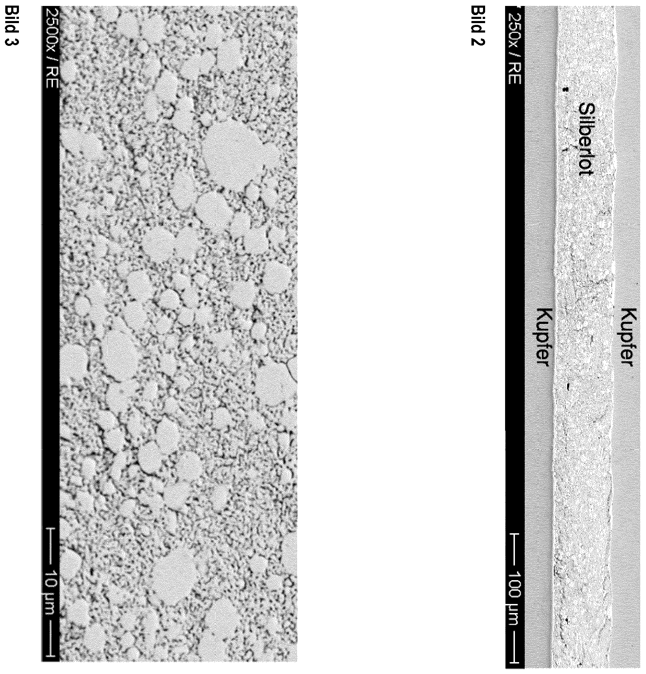

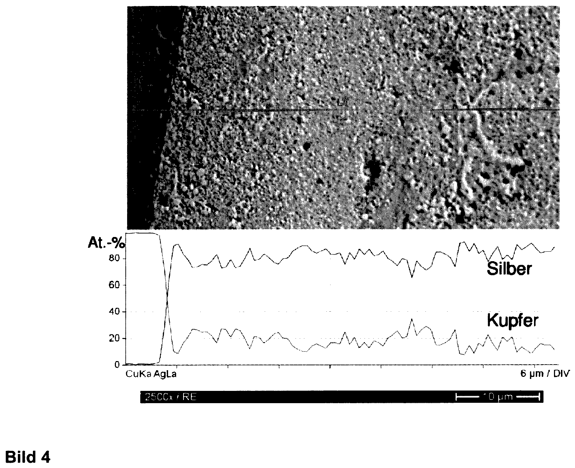

Insbesondere bildet der erfindungsgemäße metall-organische Silberkomplex Silber(I)-2-[2-(2-methoxyethoxy)ethoxy]acetat bei ca. 110°C die flüssige Phase aus, beginnend ab 130°C bilden sich Nanopartikel und die schmelzflüssige Phase bildet sich ab etwa 200°C. Bei dieser Temperatur kann prinzipiell bereits gefügt werden. Ab 220°C treten die Zersetzung und das Abgasen der organischen Bestandteile ein. Die gebildeten Nanopartikel dieses Precursors weisen einen mittleren Durchmesser von 2 bis 15 nm auf. In Abbildung 1 ist das Temperaturverhalten eines erfindungsgemäßen Silberlots mit diesem Silber-Precursor schematisch dargestellt.

Damit kompakte und homogene Silberschichten entstehen können, enthält das Lotmaterial der Erfindung als Komponente B) nanoskalige und submikroskopische, reine Silberpartikel, die agglomeriert sind. Der mittlere Teilchendurchmesser der Agglomerate beträgt 100 bis 250 nm. Die Silberpartikel werden bevorzugt aus Silbernitrat durch Reduktion mit Natriumborhydrid erhalten. Es hat sich als Vorteil erwiesen, dass diese Partikel mit der schmelzflüssigen Phase des Silber-Precursors vollständig verschmelzen, so dass auf diese Art und Weise homogen gefüllte Schichten herstellbar sind.

Um die Dichtheit der gebildeten Silberschichten weiter zu erhöhen, kann das Lotmaterial der Erfindung gegebenenfalls noch ca. 10 Gew.%, bezogen auf den Silber-Precursor A) eines silber-und/oder kupfer-organischen Komplexes beinhalten, der weder eine flüssige, noch eine schmelzflüssige Phase aufweist, aber beim Erhitzen Silbernanopartikel entwickelt. Gemäß der Erfindung wird ein primäres oder sekundäres Silber(I)-und/oder Kupfer(II)-alkanoat mit 8 bis 12 Kohlenstoffatomen eingesetzt, vorzugsweise ein Silber(I)- und/oder Kupfer(II)-n-alkanoat, besonders bevorzugt Silber-n-nonanoat, Silber-n-decanoat, Silber-n-dodecanoate, Kupfer-n-nonanoat oder Kupfer-n-decanoat. Durch Einsatz eines Kupfer-n-alkanoates ist es möglich, auch einen erhöhten Anteil an Kupfer in die Schicht einzubringen.

Das Lotmaterial der Erfindung kann in einer Ausführungsform der Erfindung als Lösungsmittel einen Alkohol enthalten. In diesem Fall ist das Lotmaterial eine Paste, die soviel Alkohol enthält, dass sie streichfähig ist. Der Alkohol ist vorzugsweise ausgewählt aus der Gruppe der C1-C4-Alkohole, besonders bevorzugt Ethanol oder Methanol. Alternativ kann auch Butylglycol (2-Butoxyethanol) als Alkohol enthalten sein. Wird Butylglycol verwendet, so agieren diese Moleküle als zusätzliche Liganden für die Nanopartikel. Zu fügende Elemente mit Silberlot-Pasten der Erfindung, die Butylglycol als Alkohol enthalten, können direkt auf Endtemperatur gebracht werden, da der Siedepunkt von Butylglycol bei 170°C liegt. Bei Pastenzubereitungen mit Methanol oder Ethanol muss dieses langsam verdampft werden, danach kann die zu fügende Probe direkt auf Endtemperatur gebracht werden.

Die erfindungsgemäßen Silberlot-Pasten enthalten in einer bevorzugten Ausführungsform Silber-Precursor A) und agglomerierte Silberpartikel B) im Verhältnis 1:0,7 bis 1:1,5. Das Verhältnis von Silber-Precursor A) zu Precursor C) beträgt erfindungsgemäß 1:0,3 bis 1:0,7.

Es hat sich gezeigt, dass mit den erfindungsgemäßen Pasten sehr dichte Schichten hergestellt werden können, wenn die Pasten vor ihrer Verwendung zum Fügen langsam (z. B. mit 7 bis 8°C/Minute oder innerhalb von 30 Minuten) unter Argon erhitzt werden, z. B. über 250°C. Nach einer kurzen Haltezeit, z. B. 5 Minuten, lässt man die Pasten abkühlen und nimmt nach Abkühlung auf 100 bis 150°C das Schutzgas weg.

In einer weiteren Ausführungsform der Erfindung enthält das Lotmaterial keinen Alkohol, sondern das Lotmaterial ist ein Pulver, das zur besseren Handhabbarkeit beim Fügen kompaktiert (verpresst) wurde. Es kann so zusammengedrückt werden, dass es seine endgültige Form behält (Pressling) und so zum Fügen problemlos einsetzbar ist. Die erfindungsgemäßen Silberlot-Pulver enthalten in einer bevorzugten Ausführungsform Silber-Precursors A) und agglomerierte Silberpartikel B) im Verhältnis 1:0,25 bis 1:1. Das Verhältnis von Silber-Precursor A) zu Precursor C) beträgt erfindungsgemäß 1:0,5 bis 1:0,15, vorzugsweise 1:0,1. Ist Precursor C) ein Kupfer-Precursor, um den Kupferanteil in der Schicht zu erhöhen, so beträgt der Anteil 1:0,5.

Gegenstand der vorliegenden Erfindung ist auch die Herstellung des erfindungsgemäßen Lotmaterials. Dabei werden dem Silber-Precursor A), der in der Regel ein Feststoff ist, die beschriebenen agglomerierten Silbernanopartikel B) und der silber-und/oder kupfer-organische Komplex C) zugesetzt und zur Herstellung einer Paste lediglich soviel Alkohol zugegeben, dass eine hochviskose, streichfeste Paste entsteht. Die Paste kann dann gegebenenfalls vor ihrem Einsatz zum Fügen - wie oben beschrieben - unter Argon als Schutzgas langsam über die Sintertemperatur erhitzt werden, wobei die Paste aber nicht sintert, sonder pastös und streichfähig bleibt. Zur Herstellung des erfindungsgemäßen pulvrigen Lotmaterials werden die Komponenten A) und B) und C) zusammengegeben und kein Alkohol zugesetzt, sondern das entstandene Pulver so kompaktiert, dass ein handhabbarer Pressling ensteht.

Ein weiterer Gegenstand der vorliegenden Erfindung ist die Verwendung des erfindungsgemäßen Lotmaterials zum drucklosen Fügen wenigstens zweier zur Kontaktierung vorgesehener metallischer oder metallisierter Substrate (unedle Metalle), insbesondere von Kupfersubstraten, indem die streichfeste Silberlotpaste oder das kompaktierbare oder kompaktierte Pulver (Pressling) zwischen die zu verbindenden Substrate gebracht wird, der Alkohol wie oben beschrieben gegebenenfalls verdampft wird und die zu fügenden Substrate mit dem Lotmaterial bei einer Fügetemperatur im Bereich von 150 bis 250°C, vorzugsweise 200 bis 250°C, gesintert werden, wodurch elementares Silber zwischen den Kontaktflächen gebildet wird. Die Probe wird jeweils direkt auf Endtemperatur gebracht, nach optionalem Verdampfen des Alkohols, falls vorhanden und wenn es sich um Methanol oder Ethanol handeln sollte. Vorzugsweise liegt die Fügetemperatur bei >220°C bis 250°C, besonders bevorzugt bei 230 bis 250°C. Silberschichten mit kurzen Prozess- und Haltezeiten können im Bereich ab ca. 230°C erhalten werden. Es hat sich gezeigt, dass zum Beispiel bei einer Fügetemperatur von 250°C die Haltezeit im Ofen ca. eine Stunde beträgt, wenn es sich um größere zu fügende Substrate handelt. Generell beträgt die Haltezeit beim Fügen mit dem erfindungsgemäßen Lotmaterial zwischen 3 Minuten und 30 Minuten. Sie beträgt 3 bis 5 Minuten, maximal 10 Minuten, wenn es sich um miniaturisierte Bauteile handelt.

Das erfindungsgemäße Lotmaterial erlaubt also ein Fügeverfahren bei relativ niedrigen Temperaturen, das keine Anwendung von Druck erfordert und mit dem dichte und homogene Schichten erhalten werden. Die so gebildete Silberschicht und Fügeverbindung schmilzt erst wieder auf, wenn die Schmelztemperatur des Massivsilbers von 961°C erreicht ist. Damit sind die so gebildeten Lotschichten bei thermischer Belastung zuverlässig haltbar.

Die vorliegende Erfindung basiert wesentlich auf dem Einsatz des erfindungsgemäßen Silber-Precursors A). Es kann nicht nur die metallisch-schmelzflüssige Phase des erfindungsgemäß eingesetzten Silber-Precursors vorteilhaft zum Einschluss der Silberpartikel genutzt werden, sondern auch die sich bildende flüssige Phase, welche entsteht noch bevor Nanopartikel gebildet werden. Die silberhaltige Flüssigkeit tritt mit dem Kupferbasiswerkstoff in eine elektrochemische Austauschreaktion, so dass sich das Silber - wie angestrebt - als Metall abscheidet und das Kupfer gleichzeitig angelöst wird. Dadurch wird eine gleichmäßige Verteilung von Kupfer von mindestens 2 bis 3 Atom-% in der gesamten Silberschicht und haftfeste Phasengrenzen Silber/Kupfer erreicht.

Nachstehend wird die Erfindung an Ausführungsbeispielen näher erläutert, ohne sie darauf einzuschränken.

Die beigefügten Abbildungen zeigen:
Bild 1. Erscheinungsformen eines Silberprecursor-Tropfens (Durchmesser ca. 10 mm) bei Temperaturerhöhung: a) und b) Bildung von roten Nanopartikeln in der (gelben) flüssigen Phase bei 140-145 °C; c) Silber-metallisch-schmelzflüssige Phase bei 190 °C; d) Ausgasen der organischen Bestandteile bei 230 °C
Bild 2. REM-Aufnahme von einem Silberlot zwischen Kupferteilen, hergestellt bei 250 °C, Haltezeit 1 Stunde
Bild 3. Vergrößerter Ausschnitt aus Bild 2
Bild 4. REM-Aufnahme von einem Silberlot mit erhöhtem Kupferanteil zwischen Kupfer, hergestellt bei 250 °C, Haltezeit 1 Stunde. Die Verteilung von Silber und Kupfer in der Schicht wird durch den Linescan dargestellt.
Abb. 1: Temperaturverhalten der Paste gemäß Beispiel 1

### Beispiel 1:

### Herstellung erfindungsgemäßer Lotmaterialien mit Silber(I)-2-[2-(2-methoxyethoxy)ethoxylacetat als Silber-Precursor

### Herstellung des Silber-Precursors A):

10 g Silbernitrat (59 mmol) werden in 8 ml Acetonitril gelöst und mit 100 ml Ethanol versetzt. Zu dieser Mischung wird langsam unter Rühren eine Mischung gegeben, die aus 13,36 g (11,5 ml, 75 mmol)) der entsprechenden Säure 2-[2-(2-methoxyethoxy)ethoxy]essigsäure, 9,0 ml (6,57 g, 65 mmol) Triethylamin und 100 ml Ethanol besteht. Nach 15 Minuten Rühren und 2 Stunden Stehen wird das Reaktionsprodukt in einem Eisbad 2 Stunden gekühlt, wobei ein Niederschlag entsteht. Dieser wird abfiltriert und nacheinander mit Ethanol und Aceton gewaschen.

### Herstellung des Silber-Precursors C):

Die vorgehende Verfahrensweise ist die gleiche für die Herstellung von Silberdecanoat:
10 g Silbernitrat (in 8 ml Acetonitril und 100 ml Ethanol) und 12,92 g (75 mmol) Decansäure mit 9,0 ml (65 mmol) Triethylamin und 150 ml Ethanol.

und Kupferdecanoat:
10,0 g (74 mmol) Kupfer(II)chlorid (in 10 ml dest. Wasser und 100 ml Ethanol) und 25,84 g (150 mmol) Decansäure mit 18,0 ml (130 mmol) Triethylamin und 150 ml Ethanol.

### Herstellung der Silberpartikel B):

3,03 g (80 mmol) Natriumborhydrid werden in 300 ml dest. Wasser gelöst und in einem Eisbad 30 Minuten unter Rühren gekühlt. Danach werden zu dieser Lösung 6,8 g (40 mmol) Silbernitrat, gelöst in 50 ml dest. Wasser, langsam zugetropft. Der sich dabei bildende Niederschlag wird abfiltriert und nacheinander mit Ethanol und Aceton gewaschen.
a) Aus den hergestellten Komponenten A), B) und C) wurde ein Pulver mit folgenden Mengenverhältnissen, bezogen auf den Silber-Precursor A), hergestellt:
   Precursor A : Silberpartikel B = 1 : 0,7
   Precursor A : Precursor C = 1 : 0,1
   Bild 2 und 3 zeigen die REM-Aufnahme der mit diesem Pulver erzeugten Silberschicht.
b) Es wurde ein Pulver mit den hergestellten Komponenten A), B) und C) mit folgenden Mengenverhältnissen hergestellt:
   Precursor A : Silberpartikel B = 1 : 0,4
   Precursor A : Kupfer-Precursor C = 1 : 0,5

### Beispiel 2:

### Fügen von Kupfersubstraten mit dem Pulver gemäß Beispiel 1:

Vorbereitung der Substrate: Durch eine Reinigung der Kupferteile mit Ethanol in einem Ultraschallbad wurde sichergestellt, dass die Oberflächen fettfrei waren. Die Kupferoberflächen wurden anschließend auf herkömmliche Weise in Zitronensäure gebeizt.

Auf das untere Teil der vorbereiteten, zu fügenden Flächen wurde das leicht zusammenpressbare Lotmaterial aufgebracht und das Fügeoberteil leicht angedrückt, so dass ein kompletter Kontakt zwischen Fügematerial und Oberteil angenommen werden konnte. Danach wurden die Teile direkt auf die Fügetemperatur von 250 °C gebracht. Da die Proben aus massiven Kupferteilen waren, wurde trotz der guten Wärmeleitfähigkeit des Kupfergrundmaterials eine Haltezeit von 30 Minuten bei 250 °C gewählt. Die Proben wurden aus dem Ofen genommen und sich einer Abkühlung auf Raumtemperatur überlassen.

Da das Pulver den Kupferprecursor C) enthält, wurde die Probe in einen Ofen gebracht, der unter Stickstoff-Schutzgas betrieben werden kann, um Oxidationseffekte des Kupferprecursors bei Luftatmosphäre zu vermeiden.

Bild 4 zeigt die REM-Aufnahme der mit diesem kupferhaltigen Silberpulver hergestellten Schicht.

## Patentansprüche

1. Lotmaterial enthaltend
A) Silber(I)-2-[2-(2-methoxyethoxy)ethoxy]acetat als einen metall-organischen Silber-Precursor;
B) 25-150 Gew%, bezogen auf das Gewicht des Silber-Precursors A), unbeschichtete und agglomerierte Silberpartikel mit einem mittleren Teilchendurchmesser der Agglomerate von 100-250 nm; und
C) ein primäres oder sekundäres Silber(I)- und/oder Kupfer(II)-alkanoat mit 8 bis 12 Kohlenstoffatomen, wobei ein Mengenverhältnis von Silber-Precursor A) zu Komponente C) im Bereich von 1:0,3 bis 1:0,7 liegt, wenn das Lotmaterial eine alkoholhaltige Paste ist, oder im Bereich von 1:0,15 bis 1:0,5, vorzugsweise 1:0,1, liegt, wenn das Lotmaterial ein alkoholfreies Pulver ist;
und optional einen Alkohol als Lösungsmittel.

2. Lotmaterial nach Anspruch 1,
**dadurch gekennzeichnet, dass**
das Lotmaterial eine Paste ist, die soviel Alkohol als Lösungsmittel enthält, das sie streichfähig ist.

3. Lotmaterial nach Anspruch 1,
**dadurch gekennzeichnet, dass**
das Lotmaterial ein kompaktiertes Pulver ist, das keinen Alkohol enthält.

4. Lotmaterial nach Anspruch 2,
**dadurch gekennzeichnet, dass**
der Alkohol ein C₁-C₄-Alkohol oder Butylglycol ist.

5. Verfahren zur Herstellung eines Lotmaterials enthaltend
A) Silber(I)-2-[2-(2-methoxyethoxy)ethoxy]acetat als einen metall-organischen Silber-Precursor;
B) 25-150 Gew%, bezogen auf das Gewicht des Silber-Precursors A), unbeschichtete und agglomerierte Silberpartikel mit einem mittleren Teilchendurchmesser der Agglomerate von 100-250 nm; und
C) ein primäres oder sekundäres Silber(I)- und/oder Kupfer(II)-alkanoat mit 8 bis 12 Kohlenstoffatomen, wobei ein Mengenverhältnis von Silber-Precursor A) zu Komponente C) im Bereich von 1:0,3 bis 1:0,7 liegt, wenn das Lotmaterial eine alkoholhaltige Paste ist, oder im Bereich von 1:0,15 bis 1:0,5, vorzugsweise 1:0,1, liegt, wenn das Lotmaterial ein alkoholfreies Pulver ist;
wobei zum metall-organischen Silber-Precursor A) die agglomerierten Silberpartikel B) und das primäre oder sekundäre Silber(I)-und/oder Kupfer(II)-alkanoat mit 8 bis 12 Kohlenstoffatomen C) gegeben werden, und
zur Herstellung einer Paste lediglich soviel Alkohol zugesetzt wird, dass eine streichfeste Paste erhalten wird, oder
zur Herstellung eines kompaktierten Pulvers die Mischung zusammengedrückt wird und kein Alkohol zugesetzt wird.

6. Verfahren nach Anspruch 5,
**dadurch gekennzeichnet, dass**
die erhaltene Paste unter Argon als Schutzgas mit 7 bis 8°C pro Minute über die Sintertemperatur erhitzt wird.

7. Verwendung eines Lotmaterials nach einem der Ansprüche 1 bis 4 zum drucklosen Fügen wenigstens zweier zur Kontaktierung vorgesehener metallischer oder metallisierter Substrate,
wobei das Lotmaterial als streichfeste Paste oder kompaktierbares oder kompaktiertes Pulver zwischen die zu verbindenden Substrate gebracht wird, der Alkohol gegebenenfalls verdampft wird und die zu fügenden Substrate mit dem Lotmaterial direkt auf eine Fügetemperatur im Bereich von 150-250°C gebracht und bei dieser Temperatur gesintert werden, wodurch elementares Silber zwischen den Kontaktflächen gebildet wird.

8. Verwendung nach Anspruch 7,
**dadurch gekennzeichnet, dass**
die zu fügenden Substrate mit dem aufgebrachten Lotmaterial bei einer Fügetemperatur im Bereich von 200°C bis 250°C gesintert werden.

9. Verwendung nach Anspruch 7 oder 8,
**dadurch gekennzeichnet, dass**
die Haltezeit beim Fügen in Abhängigkeit von der Größe der zu fügenden Substrate zwischen 3 Minuten bis zu 30 Minuten beträgt.

10. Verwendung nach Anspruch 7, **dadurch gekennzeichnet, dass** die zur Kontaktierung vorgesehenen Substrate Kupfersubstrate sind.

## Claims

1. A solder material containing:
A) silver(I)-2-[2-(2-methoxyethoxy)ethoxy]acetate as a metal-organic silver precursor;
B) 25 - 150 wt.%, with respect to the weight of the silver precursor A), uncoated and agglomerated silver particles with an average particle size of the agglomerate of 100 - 250 nm; and
C) a primary or secondary silver(I) and/or copper(II) alkanoate with 8 to 12 carbon atoms, wherein a quantitative ratio of silver precursor A) to component C) lies in the range from 1:0.3 to 1:0.7 if the solder material is an alcohol-containing paste, or in the range from 1:0.15 to 1:0.5, preferably 1:0.1 if the solder material is an alcohol-free powder;
and optionally an alcohol as a solvent.

2. The solder material according to claim 1,
**characterized in that**
the solder material is a paste which contains as a solvent as much alcohol so as to be spreadable.

3. The solder material according to claim 1,
**characterized in that**
the solder material is a compacted powder that contains no alcohol.

4. The solder material according to claim 2,
**characterized in that**
the alcohol is a C₁-C₄ alcohol or butyl glycol.

5. A method for producing a solder material containing
A) silver(I)-2-[2-(methoxyethoxy)ethoxy]acetate as a metal-organic silver precursor;
B) 25 - 150 wt.%, with respect to the weight of the silver precursor A), uncoated and agglomerated silver particles with an average particle size of the agglomerate of 100 - 250 nm; and
C) a primary or secondary silver(I) and/or copper(II) alkanoate with 8 to 12 carbon atoms, wherein a quantitative ratio of silver precursor A) to component C) lies in the range from 1:0.3 to 1:0.7 if the solder material is an alcohol-containing paste, or in the range from 1:0.15 to 1:0.5, preferably 1:0.1 if the solder material is an alcohol-free powder;
wherein the agglomerated silver particles B) and the primary or secondary silver(I) and/or copper(II) alkanoate with 8 to 12 carbon atoms C) are added to the metal-organic silver precursor A), and
to produce a paste, only as much alcohol is added so that a spreadable paste is obtained, or
to produce a compacted powder, the mixture is compressed and no alcohol is added.

6. The method according to claim 5,
**characterized in that**
the obtained paste is heated above the sintering temperature at 7 to 8 °C per minute with argon as the protective gas.

7. Use of a solder material according to any one of claims 1 to 4 for joining metal or metallic substrates provided for contacting without pressure,
wherein the solder material is applied as a spreadable paste or compactable or compacted powder between the substrates to be connected, the alcohol is evaporated if necessary, and the substrates to be joined using the solder material are brought directly to a joining temperature in the range from 150 - 250 °C and sintered at this temperature, by which means elementary silver is formed between the contact surfaces.

8. The use according to claim 7,
**characterized in that**
the substrates to be joined using the applied solder material are sintered at a joining temperature in the range from 200 °C to 250 °C.

9. The use according to claim 7 or 8,
**characterized in that**
the holding time during joining is between 3 minutes and up to 30 minutes, depending on the size of the substrates to be joined.

10. The use according to claim 7,
**characterized in that**
the substrates provided for the contacting are copper substrates.

## Revendications

1. Brasure contenant
A) du 2-[2-(2-méthoxyéthoxy)éthoxy]acétate d'argent (|) en tant qu'un précurseur d'argent métallo-organique,
B) 25 - 150 %/poids, par rapport au poids du précurseur d'argent A), de particules d'argent non revêtues et agglomérées avec un diamètre particulaire moyen des agglomérats de 100 - 250 nm, et
C) un alcanoate d'argent (I) et/ou de cuivre (II) primaire ou secondaire avec 8 à 12 atomes de carbone, sachant qu'un rapport de quantité entre le précurseur d'argent A) et les composants C) se situe dans une plage de 1 : 0,3 à 1 : 0,7, si la brasure est une pâte alcoolisée ou dans une plage de 1 : 0,15 à 1 : 0,5, de préférence 1 : 0,1, si la brasure est une poudre sans alcool,
et en option un alcool en tant que solvant.

2. Brasure selon la revendication 1,
**caractérisée en ce que**
la brasure est une pâte, qui contient autant d'alcool en tant que solvant, qu'elle peut être étalée.

3. Brasure selon la revendication 1,
**caractérisée en ce que**
la brasure est une poudre compacte, qui ne contient pas d'alcool.

4. Brasure selon la revendication 2,
**caractérisée en ce que**
l'alcool est un alcool C₁-C₄ ou du butylglycol.

5. Procédé de production d'une brasure contenant
A) du 2-[2-(2-méthoxyéthoxy)éthoxy]acétate d'argent (I) en tant qu'un précurseur d'argent métallo-organique,
B) 25 - 150 %/poids, par rapport au poids du précurseur d'argent A), de particules d'argent non revêtues et agglomérées avec un diamètre particulaire moyen des agglomérats de 100 - 250 nm, et
C) un alcanoate d'argent (I) et/ou de cuivre (II) primaire ou secondaire avec 8 à 12 atomes de carbone, sachant qu'un rapport de quantité entre le précurseur d'argent A) et les composants C) se situe dans une plage de 1 : 0,3 à 1 : 0,7, si la brasure est une pâte alcoolisée ou dans une plage de 1 : 0,15 à 1 : 0,5, de préférence 1 : 0,1, si la brasure est une poudre sans alcool,
sachant que les particules d'argent B) agglomérées et l'alcanoate d'argent (I) et/ou de cuivre (II) primaire ou secondaire avec 8 à 12 atomes de carbone C) sont ajoutées au précurseur d'argent métallo-organique A), et
pour la production d'une pâte, on n'ajoute seulement de l'alcool de manière à obtenir une pâte solidaire à l'étalement, ou
pour la production d'une poudre compacte, le mélange est comprimé et aucun alcool n'est ajouté.

6. Procédé selon la revendication 5,
**caractérisé en ce que**
la pâte obtenue est chauffée de 7 à 8 °C par minute au-dessus de la température de frittage sous argon en tant que gaz protecteur.

7. Utilisation d'une brasure selon l'une quelconque des revendications 1 à 4 pour l'assemblage sans pression d'au moins deux substrats métalliques ou métallisés prévus pour la mise en contact,
sachant que la brasure est placée en tant que pâte solidaire à l'étalement ou poudre compactable ou compactée entre les substrats à lier, l'alcool est éventuellement évaporé et les substrats à assembler sont appliqués avec la brasure directement à une température d'assemblage dans une plage de 150 - 250 °C et sont frittés à cette température, de l'argent élémentaire étant formé de ce fait entre les surfaces de contact.

8. Utilisation selon la revendication 7,
**caractérisée en ce que**
les substrats à assembler avec la brasure appliquée sont frittés à une température d'assemblage dans une plage de 200 °C à 250 °C.

9. Utilisation selon la revendication 7 ou 8,
**caractérisée en ce que**,
le temps de maintien lors de l'assemblage est entre 3 minutes à 30 minutes en fonction de la taille des substrats à assembler.

10. Utilisation selon la revendication 7,
**caractérisée en ce que**
les substrats prévus pour la mise en contact sont des substrats de cuivre.
